# EUROPEAN PATENT SPECIFICATION

(11) **EP 2 814 199 B1**
(45) Date of publication and mention of the grant of the patent: **28.02.2018**
(21) Application number: 12868319.0
(22) Date of filing: 21.08.2012
(51) Int. Cl.: H04L 9/00, H04L 29/06, H04L 9/08, H04L 9/14, G06F 21/62, H04L 29/08

(54) **METHOD AND SYSTEM FOR DOWNLOADING FILE**
VERFAHREN UND SYSTEM ZUM HERUNTERLADEN VON DATEIEN
PROCÉDÉ ET SYSTÈME POUR LE TÉLÉCHARGEMENT D'UN FICHIER

(30) Priority: 09.02.2012 CN 201210028712
(43) Date of publication of application: 17.12.2014
(73) Proprietor: ZTE Corporation, Shenzhen, Guangdong 518057 (CN)
(72) Inventor: LUO, Qingkai, Shenzhen Guangdong 518057 (CN)
(74) Representative: Protector IP Consultants AS
(86) International application number: PCT/CN2012/080412
(87) International publication number: WO 2013/117087

(56) References cited:
- WO-A1-2004/054189
- WO-A1-2005/004485
- WO-A1-2011/071423
- CN-A- 1 968 081
- CN-A- 101 572 698
- CN-A- 101 594 226
- US-A1- 2005 138 350
- US-A1- 2009 060 198

## Description

### TECHNICAL FIELD

The disclosure relates to the field of communication and in particular to a file downloading method and a file downloading system.

### BACKGROUND

In communication network management, File Transfer Protocol (FTP), with its high transfer speed and high efficiency, is widely applied. Like most of Internet services, FTP is also a client/server system. The user can access a server program running on a remote computer via a client program. An FTP server is a computer which provides services and transfers files according to FTP, and an FTP client is a computer which is connected with the FTP server and transfer files between itself and the server in accordance with FTP.

The security requirement of operators on network management becomes higher and higher as technologies advance. Although high in transfer efficiency, FTP is low in security and is therefore gradually replaced by Secure FTP (SFTP) and FTP over SSL (FTPS) and the like. Although the security of SFTP and FTPS is enhanced, the enhancement is achieved at the expense of efficiency, causing capacity reduction and speed reduction which is fatal to the large-network management.

The processing capacity of an FTP server and an FTP client is sufficient with respect to transfer speed, however, transfer speed is a bottleneck for SFTP and FTPS, the use of a security protocol such as SFTP or FTPS will intensify the restrictive effect of the bottleneck.

Further, it is not definitely safe to use a security protocol such as SFTP or FTPS. For sensitive information such as a version file, an encrypted data file can be stored through a simple Man-in-the-Middle session hijacking and then forcibly cracked with ease.

In conclusion, in existing network management, both the efficiency and the security of file transfer need to be further improved.

WO 2004/054189 A1 discusses a method and a system for secure transmission of e-mail;

WO 2011/071423 A1 discusses a method and an arrangement for enabling play-out of media;

US 2009/060198 A1 discusses a secure message transport using message seg mentation.

### SUMMARY

The main technical problem to be addressed by the disclosure is to provide a file downloading method and system, which are capable of improving both the efficiency and the security of file transfer.

To address above the technical problem, the present disclosure provides a file downloading method, as recited in claim 1, and also provides a file downloading system, as recited in claim 5. This scheme at least has the following beneficial effects.

The transfer efficiency is obviously improved. Existing security protocols including SFTP and FTPS adopt a scheme in which downloading and encrypting of an original file are performed simultaneously and therefore imposes a great restriction on downloading speed and system capacity, besides, the establishment of an FTP connection also takes a long time for the sake of a key negotiation process, thus further limiting the efficiency of file transfer. In embodiments of the disclosure, the encryption and the transfer of an original file are separated, specifically, the original file is downloaded first and then encrypted, the encrypted file and related encryption parameters are transferred via different links so that the file can be downloaded by using a protocol with a high transfer speed (such as FTP) independent of a security protocol such as SFTP or FTPS, thus improving the efficiency of file transfer. In addition, no data encryption or decryption is needed in the transfer process of the file, thus further improving the efficiency of file transfer. Generally, in the actual application of the disclosure, a file is encrypted once and then downloaded synchronously by a plurality of client devices, which shortens more transfer time and improves transfer efficiency.

The security performance of transfer is improved. Security communication protocols mainly suffer three types of attacks: interception, tampering and counterfeit. (1) For the interception, the existing security encryption algorithms are gradually disabled as the hardware develops, and the simplest method for coping with this attack is lengthening a key. Because encryption is carried out before the transfer process and decryption is carried out after the transfer process in the disclosure, instead of encrypting/decrypting a file during the transfer process, the disclosure is free from real-time limitation, thus, the key used in the disclosure can be longer than the key of a security protocol such as SFTP or FTPS, thus improving the security. (2) For the tampering, algorithms including MD5, used during the encryption process in the disclosure, are supportive to irreversible hash function, thus preventing tampering. (3) in the disclosure, as encryption parameters are transmitted via a security link and the transfer time of the encryption parameters is not strictly associated with the transfer time of the encrypted file, even if the security link is attacked, the security of the transmitted encrypted file can still be greatly ensured. (4) For counterfeit (that is, the Man-in-the-Middle attack), under the existing FTPS or SFTP frame, it is impossible for a system to prevent the forced decryption of all the encrypted data intercepted by a man in the middle; especially for a piece of version software with a long valid period, even a lengthened key cannot prevent the software from being jailbroken within the valid period. In embodiments of the disclosure, as an original file is divided first and then separately encrypted, it is extremely difficult to decrypt the file because the lengths of N fragments need to be correctly determined to decrypt the whole file while the length of each of the fragments is random and the whole data file is required for decryption, thus further improving the security of file transfer.

### BRIEF DESCRIPTION OF THE DRAWINGS

Fig. 1 is a structural block diagram of a file downloading system according to embodiment 1 of the disclosure;
Fig. 2 is a flowchart illustrating the flow of a file downloading method according to embodiment 1 of the disclosure;
Fig. 3 is a flowchart illustrating the flow of a file downloading method according to embodiment 2 of the disclosure;
Fig. 4 is a schematic diagram illustrating the fragmentation of a file according to embodiment 2 of the disclosure; and
Fig. 5 is a schematic diagram illustrating the recombination of a file according to embodiment 2 of the disclosure.

### DETAILED DESCRIPTION

The disclosure is described below in detail with reference to accompanying drawings when read in conjunction with embodiments.

### Embodiment 1

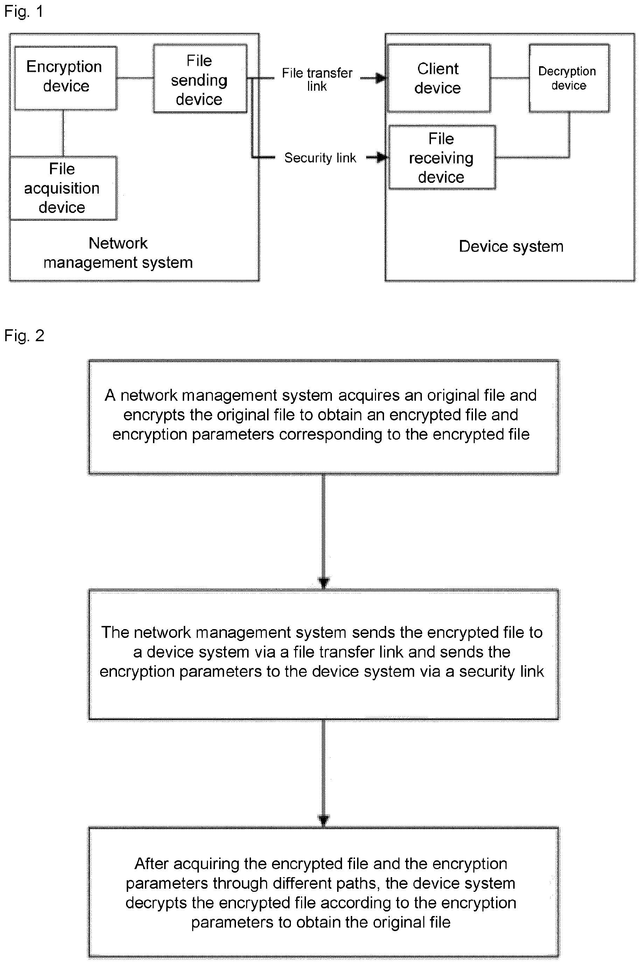

Fig. 1 is a structural block diagram illustrating a file downloading system provided in embodiment 1. As shown in Fig. 1, the file downloading system includes a network management system and a device system. The network management system includes a file acquisition device, an encryption device and a file sending device. The file acquisition device is configured to acquire an original file. It should be noted that the original file refers in the embodiment to an unencrypted file. For example, assuming that the file acquired by the network management system is a version file, the original file mentioned here refers to an unencrypted version file. The encryption device is configured to encrypt the original file acquired by the file acquisition device to obtain an encrypted file and corresponding encryption parameters. The file sending device is configured to send the encrypted file acquired from the encryption device to the device system via a file transfer link and send the encryption parameters acquired from the encryption device to the device system via a security link. In the embodiment, the file sending device may include a file transfer server (i.e., an FTP server) through which the encrypted file is sent to the device system via the file transfer link.

That is, in the embodiment, the encrypted file and the encryption parameters are separately sent via different channels.

The device system includes a file receiving device, a decryption device and at least one client device. The client device downloads the encrypted file from the network management system, and correspondingly, the client device may be an FTP client in the embodiment. The file receiving device acquires corresponding encryption parameters, which specifically refers to the related encryption parameters sent from the file sending device of the network management system, from the network management system. The decryption device decrypts the encrypted file according to the acquired encryption parameters to obtain the original file.

Specifically, in the embodiment, the encryption device of the network management system may include a fragmentation module, a parameter acquisition module and an encryption module.

The fragmentation module divides the acquired original file into N fragments according to a preset division rule. N is an integer greater than or equal to 1. The preset division rule may be in the form of a fixed-length based division or in the form of a random division. To further improve the security performance of transfer, random division is adopted in this embodiment.

The parameter acquisition module acquires a set of fragment flags for recording the position of each encrypted fragment in the encrypted file and a set of keys for recording the key of each fragment. The parameter acquisition module obtains the set of keys according to the key of each fragment. The encryption parameters at least include the set of fragment flags and the set of keys.

The encryption module encrypts and recombines the N fragments from the fragmentation module to obtain an encrypted file. It should be noted that in the embodiment, the encryption module encrypts each fragment using the same encryption algorithms or encrypts different fragments using different encryption algorithms according to actual situations.

The process that the encryption module encrypts and recombines the N fragments may include:
the encryption module generates a key for each fragment, and the key, which may be a symmetric key generated by the encryption module, may be specifically determined according to the encryption algorithm selected by the encryption module;
the encryption module encrypts each fragment using a symmetric key corresponding to the fragment; and
the encryption module recombines the encrypted fragments according to the sequence of the fragments prior to the division (that is, the sequence of the fragments in the original file prior to the encryption) to obtain an encrypted file.

Correspondingly, the process that the decryption device of the device system decrypts the encrypted file according to the acquired encryption parameters may include that:
the decryption device divides the encrypted file into N fragments according to the set of fragment flags;
the decryption device decrypts each fragment according to a key in the set of keys which is corresponding to the fragment; and
the decryption device recombines the decrypted fragments according to the sequence of each fragment prior to the division (here, the sequence of each fragment prior to the division refers to the sequence of each unencrypted fragment in the original file prior to the division of the original file, or refers to the sequence of each encrypted fragment in the encrypted file prior to the division of the encrypted file) to obtain the original file.

Fig. 2 is a flowchart illustrating the flow of a file downloading method disclosed in the embodiment, and as shown in Fig. 2, the method includes the following steps that:
a network management system acquires an original file and encrypts the acquired original file to obtain an encrypted file and encryption parameters corresponding to the encrypted file;
the network management system sends the encrypted file to a device system via a file transfer link and sends the encryption parameters to the device system via a security link; and
after acquiring the encrypted file and the encryption parameters sent via different links, the device system decrypts the encrypted file according to the encryption parameters to obtain the original file.

Specifically, in an example, the process that the network management system encrypts the acquired original file may include that:
the network management system divides the acquired original file into N fragments according to a preset division rule, wherein N is an integer greater than or equal to 1;
the network management system encrypts and recombines the N fragments to obtain an encrypted file, records the key of each fragment to obtain a set of keys which is for recording the key of each fragment, and obtains a set of fragment flags for recording the position of each encrypted fragment in the encrypted file, wherein the encryption parameters at least include the set of fragment flags and the set of keys.
To further improve the security of file transfer, in the example, the preset division rule is that the original file is randomly divided to obtain N fragments each of which must be longer than or as long as the smallest encrypted data block.

Specifically, the process that the network management system encrypts and recombines the N fragments may include:
generating a key for each fragment, wherein the key, the specific form of which depends on an encryption algorithm, may be a symmetric key for supporting integrity validation;
encrypting each fragment using a symmetric key corresponding to the fragment; and
recombining the encrypted fragments according to the sequence of each fragment prior to the division to obtain an encrypted file.

Correspondingly, the process that the device system decrypts the encrypted file according to the acquired encryption parameters may include:
dividing the encrypted file into N fragments according to the set of fragment flags; as the encrypted file is divided according to the set of fragment flags, it is guaranteed that the fragments obtained through the division during the decryption process are accordant with those obtained through the division during the encryption process;
decrypting each fragment according to a key in the acquired set of keys which is corresponding to the fragment; and
recombining the decrypted fragments according to the sequence of the fragments prior to the division into the original file. As the file is divided according to the set of fragment flags, the correction of the position of each decrypted segment in the original file is ensured.
To sum up, compared with existing security protocols including SFTP and FTPS, the encryption and the transfer of an original file are separated in embodiments of the disclosure. Specifically, the original file is downloaded first and then encrypted, the encrypted file and related encryption parameters are transferred via different links, so that the file can be downloaded by using a protocol with a high transfer speed (such as FTP, when FTP is used, the network management system sends the transfer path for the encrypted file and FTP-associated parameters to the device system via a security link), and is independent from the security protocol such as SFTP or FTPS, thus improving the efficiency of file transfer. In addition, no data encryption or decryption is needed in the transfer process of the file, thus further improving the efficiency of file transfer.

Meanwhile, better preventive measures are provided in the scheme described in the embodiment to cope with three types of attacks, that is, the interception, the tampering and the counterfeit with respect to network security protocols. Specifically, (1) for interception, the existing security encryption algorithms are gradually disabled as the hardware develops, the simplest method for coping with this attack is lengthening a key. Because encryption is carried out before the transfer process and decryption is carried out after the transfer process, instead of encrypting/decrypting a file during the transfer process, the disclosure is free from real-time limitation, the key used herein can be longer than that of a security protocol such as SFTP or FTPS, which naturally improves the security greatly. (2) For the tampering, algorithms including MD5, used during the encryption process in the disclosure, are supportive to irreversible hash function, thus preventing tampering. (3) For counterfeit (that is, the Man-in-the-Middle attack), under the existing FTPS or SFTP frame, it is impossible for a system to prevent the forced decryption of all the encrypted data intercepted by a man in the middle; especially for a piece of version software with a long valid period, nor a lengthened key can prevent the software from being jailbroken within the valid period. In embodiments of the disclosure, as a method of dividing an original file and then encrypting each fragment separately is adopted to randomly divide an original file into N fragments as long as each fragment can be encrypted, it is extremely difficult to decrypt the file because the lengths of the N fragments need to be correctly determined to decrypt the whole file and the length of each of the fragments is random, thus improving the security of file transfer. For example, assume that the length of a piece of version software is M minimal length units, then there may be M*(M-1)*...*(M-N+1) combinations. Generally, M is greater than 1000 and N is greater than 10, then there may be 1000*10 types of combinations at least, it can be imaged how difficult it is to select a correct one from the combinations. (4) The set of keys and the set of fragment flags are transmitted via security link regardless of the transfer time of the file, thus, the transfer of the file is highly ensured even if the security links are broken.

### Embodiment 2

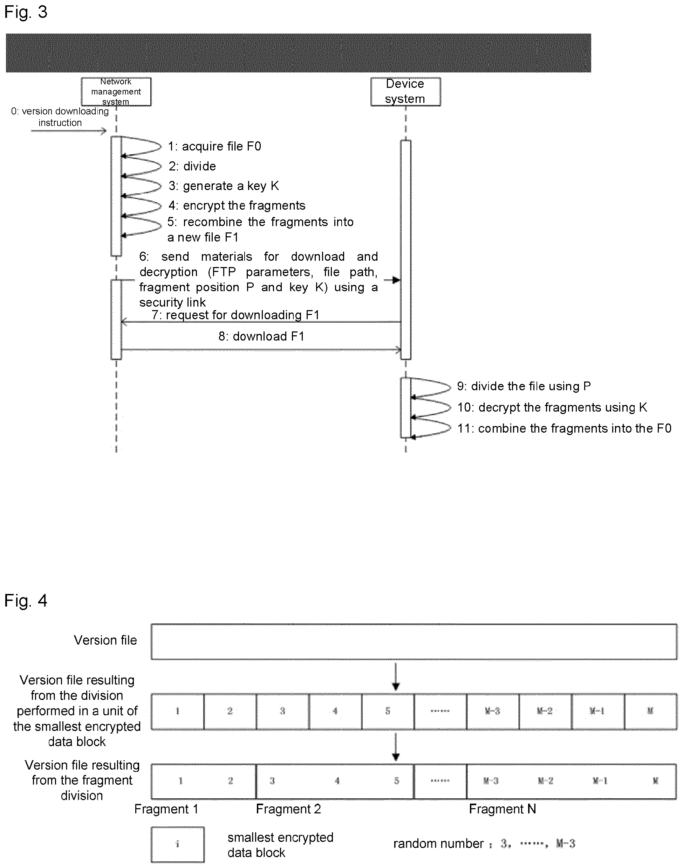

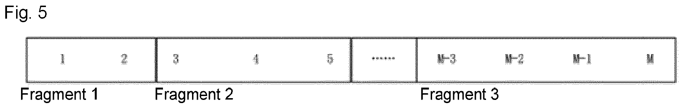

To make the disclosure understood better, the disclosure is further described by taking a specific implementation flow as an example. In the example, the file downloaded by a device system is a version file, that is, the original file acquired by a network management system is an unencrypted version file, and the specific implementation flow of the file transfer between the network management system and the device system using an FTP is described below with reference to Fig. 3:
Step 0: the network management system receives a version downloading instruction;
Step 1: the network management system acquires a version file needing to be downloaded using a file acquisition device and records the version file as F0, as the version file acquisition step is not the key point of the disclosure, this step is not detailedly described here.
Step 2: the network management system randomly divides the version file F0 into N fragments, referring to Fig. 4, the specific division process is as follows:
   Step 2.1: it is determined the value of N; in an example, the value of N is determined according to the size (Size(F0)) of the file and the length (Len(U)) of the smallest encrypted data block; in an example, the value of N may be determined using different algorithms in different actual situations; for example, N=max{Size(F0)/Len(U)/1000, 10};
   Step 2.2: assume M= Size(F0)/Len(U), that is, the file can be divided into M smallest encrypted data blocks, which are marked as 1, 2, ... M, respectively;
Step 3: the network management system generates a symmetric key for each fragment to obtain a set of keys which is recorded as K, wherein K={k1,...,kN}, and N-1 integers are randomly selected from [1, M] as the starting data blocks of N-1 encrypted fragments except the first encrypted fragment, that is, the elements in the set of fragment flags are N-1 integers randomly selected from [1, M], the set of fragment flags is recorded as P, wherein P={p1,...,pN}, each element is used to record the position of each encrypted fragment in the encrypted version file, and p1,...,pN record the positions of the heads of the fragments in F0;
Step 4: the network management system encrypts each fragment using the key corresponding to the fragment, wherein the encryption algorithm used by the network management system in the example is supportive to integrity validation;
Step 5: the network management system combines the encrypted fragments into a new version file F1 according to the original sequence, and referring to Fig. 5, it can be known that the sequence of each encrypted fragment in F1 is accordant with that of the segment in F0 prior to the encryption;
Step 6: the network management system sends the sets P and K, the transfer path for sending F1 and FTP-related parameters to the device system via the security link, and the device system stores these information; in this example, a plurality of security links, including a TCP link supportive to TLS, are selectable, and the encrypted version file is sent to the device system via an FTP server;
Step 7: the device system requests the downloading of the file F1 from the FTP server of the network management system via an FTP client;
Step 8: the file F1 is downloaded into the device system;
Step 9: the device system divides the F1 into N fragments using the set P acquired in Step 6;
Step 10: the N fragments are decrypted using the set K acquired in Step 6;
Step 11: the N decrypted fragments are combined into a new file, that is, the original file F0, according to the position marked by each element in the set P.

The mentioned above are provided to explain the disclosure in more detail in combination with specific embodiments but is not construed to as limiting the disclosure, and it should be appreciated by those of ordinary skill in the art that variations and substitutes can be devised without departing from the scope of the disclosure and that those variations and substitutes should fall within the protection range of the disclosure.

## Claims

1. A file downloading method, **characterized in that**, comprising:
acquiring, by a network management system, an original file;
encrypting, by the network management system, the original file to obtain an encrypted file and encryption parameters corresponding to the encrypted file;
sending, by the network management system, the encrypted file to a device system via a file transfer link and sending the encryption parameters to the device system via a security link; and
after the encrypted file and the encryption parameters are acquired, decrypting, by the device system, the encrypted file according to the encryption parameters to obtain the original file,
wherein the file transfer link is a File Transfer Protocol, FTP, link via which the network management system transfers files between itself and the device system, and the security link is a Transmission Control Protocol, TCP, link;
wherein the encrypting the original file to obtain an encrypted file and encryption parameters corresponding to the encrypted file, comprises:
dividing, by the network management system, the acquired original file into N fragments according to a preset division rule, wherein N is an integer greater than or equal to 1; and
encrypting and recombining, by the network management system, the N fragments to obtain the encrypted file as well as a set of fragment flags for recording a position of a head of each encrypted fragment in the encrypted file and a set of keys for recording a key of each fragment,
wherein the encryption parameters comprise the set of fragment flags and the set of keys;
wherein the preset division rule comprises randomly dividing the original file to obtain N fragments each of which is longer than or as long as a smallest encrypted data block.

2. The method according to claim 1, wherein the encrypting and recombining, by the network management system, the N fragments comprises:
generating a key for each fragment;
encrypting each fragment using a key corresponding to the fragment; and
recombining the encrypted fragments according to a sequence of the fragments prior to the division to obtain the encrypted file.

3. The method according to claim 2, wherein the decrypting, by the device system, the encrypted file according to the encryption parameters comprises:
dividing the encrypted file into N fragments according to the set of fragment flags;
decrypting each fragment according to a key in the set of keys which is corresponding to the fragment; and
recombining the decrypted fragments according to the sequence of the fragments prior to the division into the original file.

4. The method according to any one of claims 1 to 3, wherein the network management system sends the encrypted file to the device system via the file transfer link according to a file transfer protocol, and wherein the network management system sends a transfer path for sending the encrypted file and parameters related to the file transfer protocol to the device system via the security link.

5. A file downloading system, **characterized in that**, comprising: a network management system and a device system, wherein the network management system comprises a file acquisition device, an encryption device and a file sending device, and the device system comprises a file receiving device, a decryption device and at least one client device,
wherein the file acquisition device is configured to acquire an original file, the encryption device is configured to encrypt the original file to obtain an encrypted file and encryption parameters corresponding to the encrypted file, and the file sending device is configured to send the encrypted file to the device system via a file transfer link and send the encryption parameters to the device system via a security link,
the client device is configured to download the encrypted file from the network management system, the file receiving device is configured to acquire the encryption parameters from the network management system, and the decryption device is configured to decrypt the encrypted file according to the encryption parameters to obtain the original file,
wherein the file transfer link is a File Transfer Protocol, FTP, link via which the network management system transfers files between itself and the device system, and the security link is a Transmission Control Protocol, TCP, link;
wherein the encryption device comprises a fragmentation module, a parameter acquisition module and an encryption module,
wherein the fragmentation module is configured to divide the acquired original file into N fragments according to a preset division rule, wherein N is an integer greater than or equal to 1,
wherein the parameter acquisition module is configured to acquire a set of fragment flags for recording a position of a head of each encrypted fragment in the encrypted file and a set of keys for recording a key of each fragment, wherein the encryption parameters comprise the set of fragment flags and the set of keys, and
wherein the encryption module is configured to encrypt and recombine the N fragments to obtain the encrypted file;
wherein the encryption module is configured to generate a key for each fragment, to encrypt each fragment using a key corresponding to the fragment, and to recombine the encrypted fragments according to a sequence of the fragments prior to the division to obtain the encrypted file,
wherein the preset division rule comprises randomly dividing the original file to obtain N fragments each of which is longer than or as long as a smallest encrypted data block.

6. The system according to claim 5, wherein the decryption device is configured to divide the encrypted file into N fragments according to the set of fragment flags, to decrypt each fragment according to a key in the set of keys which is corresponding to the fragment, and to recombine the decrypted fragments according to the sequence of the fragments prior to the division into the original file.

7. The system according to claim 5 or 6, wherein the file sending device comprises a file transfer server through which the file sending device sends the encrypted file to the device system via the file transfer link.

## Patentansprüche

1. Verfahren zum Herunterladen von Dateien, **dadurch gekennzeichnet, dass** es folgendes umfasst:
Erfassen, durch ein Netzwerk-Verwaltungssystem, einer Originaldatei;
Verschlüsseln, durch das Netzwerk-Verwaltungssystem, der Originaldatei unter Erhalt einer verschlüsselten Datei und von Verschlüsselungsparametern entsprechend der verschlüsselten Datei;
Senden, durch das Netzwerk-Verwaltungssystem, der verschlüsselten Datei an ein Vorrichtungssystem über einen File Transfer Link und Senden der Verschlüsselungsparameter an das Vorrichtungssystem über einen Security Link; und
nach Erfassen der verschlüsselten Datei und der Verschlüsselungsparameter, Entschlüsseln durch das Vorrichtungssystem der gemäß den Verschlüsselungsparametern verschlüsselten Datei unter Erhalt der Originaldatei,
wobei der File Transfer Link ein File Transfer Protocol, FTP, Link ist, über den das Netzwerk-Verwaltungssystem Dateien zwischen sich und dem Vorrichtungssystem überträgt, und der Security Link ein Transmission Control Protocol, TCP, Link ist;
wobei das Verschlüsseln der Originaldatei unter Erhalt einer verschlüsselten Datei und von Verschlüsselungsparametern entsprechend der verschlüsselten Datei folgendes umfasst:
Unterteilen, durch das Netzwerk-Verwaltungssystem, der erfassten Originaldatei in N Fragmente gemäß einer vorgegebenen Teilungsregel, wobei N eine ganze Zahl von größer oder gleich 1 ist; und
Verschlüsseln und Rekombinieren, durch das Netzwerk-Verwaltungssystem, der N Fragmente unter Erhalt der verschlüsselten Datei sowie eines Satzes von Fragment-Markern zum Dokumentieren einer Position eines Dateikopfs von jedem verschlüsselten Fragment in der verschlüsselten Datei und eines Satzes von Schlüsseln zum Dokumentieren eines Schlüssels für jedes Fragment,
wobei die Verschlüsselungsparameter den Satz von Fragment-Markern und den Satz von Schlüsseln umfassen;
wobei die vorgegebene Teilungsregel zufälliges Unterteilen der Originaldatei unter Erhalt von N Fragmenten, die jeweils länger sind als oder so lang sind wie der kleinste verschlüsselte Datenblock, umfasst.

2. Verfahren nach Anspruch 1, wobei das Verschlüsseln und Rekombinieren durch das Netzwerk-Verwaltungssystem der N Fragmente umfasst:
Erzeugen eines Schlüssels für jedes Fragment;
Verschlüsseln von jedem Fragment unter Verwendung eines dem Fragment entsprechenden Schlüssels; und
Rekombinieren der verschlüsselten Fragmente gemäß einer Sequenz der Fragmente vor der Unterteilung unter Erhalt der verschlüsselten Datei.

3. Verfahren nach Anspruch 2, wobei das Entschlüsseln durch das Vorrichtungssystem der verschlüsselten Datei gemäß den Verschlüsselungsparametern folgendes umfasst:
Unterteilen der verschlüsselten Datei in N Fragmente gemäß dem Satz von Fragment-Markern;
Entschlüsseln von jedem Fragment gemäß einem Schlüssel in dem Satz von Schlüsseln, der dem Fragment entsprechend ist; und
Rekombinieren der entschlüsselten Fragmente gemäß der Sequenz der Fragmente vor dem Unterteilen in die Originaldatei.

4. Verfahren nach einem der Ansprüche 1 bis 3, wobei das Netzwerk-Verwaltungssystem die verschlüsselte Datei an das Vorrichtungssystem über den File Transfer Link gemäß einem File Transfer Protocol sendet, und wobei das Netzwerk-Verwaltungssystem einen Transferpfad zum Senden der verschlüsselten Datei und von Parametern in Verbindung mit dem File Transfer Protocol an das Vorrichtungssystem über den Security Link sendet.

5. System zum Herunterladen von Dateien, **dadurch gekennzeichnet, dass** es folgendes umfasst: ein Netzwerk-Verwaltungssystem und ein Vorrichtungssystem, wobei das Netzwerk-Verwaltungssystem eine Datei-Erfassungsvorrichtung, eine Verschlüsselungsvorrichtung und eine Datei-Sendevorrichtung umfasst, und das Vorrichtungssystem eine Datei-Empfangsvorrichtung, eine Entschlüsselungsvorrichtung und mindestens eine Client-Vorrichtung umfasst,
wobei die Datei-Erfassungsvorrichtung zum Erfassen einer Originaldatei konfiguriert ist, die Verschlüsselungsvorrichtung zur Verschlüsselung der Originaldatei unter Erhalt einer verschlüsselten Datei und von Verschlüsselungsparametern entsprechend der verschlüsselten Datei konfiguriert ist, und die Datei-Sendevorrichtung zum Senden der verschlüsselten Datei an das Vorrichtungssystem über einen File Transfer Link und Senden der Verschlüsselungsparameter an das Vorrichtungssystem über einen Security Link konfiguriert ist,
die Client-Vorrichtung zum Herunterladen der verschlüsselten Datei von dem Netzwerk-Verwaltungssystem konfiguriert ist, die Datei-Empfangsvorrichtung zum Erfassen der Verschlüsselungsparameter aus dem Netzwerk-Verwaltungssystem konfiguriert ist, und die Entschlüsselungsvorrichtung zum Entschlüsseln der verschlüsselten Datei gemäß den Verschlüsselungsparametern unter Erhalt der Originaldatei konfiguriert ist,
wobei der File Transfer Link ein File Transfer Protocol, FTP, Link ist, über den das Netzwerk-Verwaltungssystem Dateien zwischen sich und dem Vorrichtungssystem überträgt, und der Security Link ein Transmission Control Protocol, TCP, Link ist;
wobei die Verschlüsselungsvorrichtung ein Fragmentierungsmodul, ein Parameter-Erfassungsmodul und ein Verschlüsselungsmodul umfasst,
wobei das Fragmentierungsmodul zur Unterteilung der erfassten Originaldatei in N Fragmente gemäß einer vorgegebenen Teilungsregel konfiguriert ist, wobei N eine ganze Zahl größer als oder gleich 1 ist,
wobei das Parameter-Erfassungsmodul zum Erfassen eines Satzes von Fragment-Markern zur Dokumentieren einer Position eines Dateikopfs von jedem verschlüsselten Fragment in der verschlüsselten Datei und einen Satz von Schlüsseln zum Dokumentieren eines Schlüssels von jedem Fragment konfiguriert ist, wobei die Verschlüsselungsparameter den Satz von Fragment-Markern und den Satz von Schlüsseln umfassen, und
wobei das Verschlüsselungsmodul zur Verschlüsselung und Rekombination der N Fragmente unter Erhalt der verschlüsselten Datei konfiguriert ist;
wobei das Verschlüsselungsmodul zur Erzeugung eines Schlüssels für jedes Fragment zur Verschlüsselung von jedem Fragment unter Verwendung eines dem Fragment entsprechenden Schlüssels und zur Rekombination der verschlüsselten Fragmente gemäß einer Sequenz der Fragmente vor der Unterteilung unter Erhalt der verschlüsselten Datei konfiguriert ist,
wobei die vorgegebene Teilungsregel zufälliges Unterteilen der Originaldatei unter Erhalt von N Fragmenten, die jeweils länger sind als oder so lang sind wie der kleinste verschlüsselte Datenblock, umfasst.

6. System nach Anspruch 5, wobei die Entschlüsselungsvorrichtung zur Unterteilung der verschlüsselten Datei in N Fragmente gemäß dem Satz von Fragment-Markern, zur Entschlüsselung eines jeden Fragments gemäß einem Schlüssel in dem Satz von Schlüsseln, der dem Fragment entsprechend ist, und zur Rekombination der entschlüsselten Fragmente gemäß der Sequenz der Fragmente vor der Unterteilung in die Originaldatei konfiguriert ist.

7. System nach Anspruch 5 oder 6, wobei die Datei-Sendevorrichtung einen Dateien-Transferserver aufweist, über den die Datei-Sendevorrichtung die verschlüsselte Datei an das Vorrichtungssystem über den File Transfer Link sendet.

## Revendications

1. Procédé de téléchargement de fichier, **caractérisé en ce qu'**il comprend :
l'acquisition, par un système de gestion de réseau, d'un fichier d'origine ;
le chiffrage, par le système de gestion de réseau, du fichier d'origine pour obtenir un fichier chiffré et des paramètres de chiffrage correspondant au fichier chiffré ;
l'envoi, par le système de gestion de réseau, du fichier chiffré à un système de dispositifs via une liaison de transfert de fichier et l'envoi des paramètres de chiffrage au système de dispositifs via une liaison de sécurité ; et
après l'acquisition du fichier chiffré et des paramètres de chiffrage, le déchiffrage, par le système de dispositifs, du fichier chiffré en fonction des paramètres de chiffrage afin d'obtenir le fichier d'origine,
dans lequel la liaison de transfert de fichier est une liaison de protocole de transfert de fichier, FTP, via laquelle le système de gestion de réseau transfère les fichiers entre lui-même et le système de dispositifs, et la liaison de sécurité est une liaison de protocole de commande de transmission, TCP ;
dans lequel le chiffrage du fichier d'origine pour obtenir un fichier chiffré et des paramètres de chiffrage correspondant au fichier chiffré comprend :
la division, par le système de gestion de réseau, du fichier d'origine acquis en N fragments en fonction d'une règle de division prédéfinie, N étant un entier supérieur ou égal à 1 ; et
le chiffrage et la recombinaison, par le système de gestion de réseau, des n fragments pour obtenir le fichier chiffré ainsi qu'un ensemble d'indicateurs de fragment pour enregistrer une position d'une tête de chaque fragment chiffré dans le fichier chiffré et un ensemble de clés pour enregistrer une clé de chaque fragment,
dans lequel les paramètres de chiffrage comprennent l'ensemble d'indicateurs de fragment et l'ensemble de clés ;
dans lequel la règle de division prédéfinie comprend la division aléatoire du fichier d'origine pour obtenir N fragments, chacun d'eux étant plus long ou aussi long qu'un bloc de données chiffrées le plus petit.

2. Procédé selon la revendication 1, dans lequel le chiffrage et la recombinaison, par le système de gestion de réseau, des N fragments comprend :
la génération d'une clé pour chaque fragment ;
le chiffrage de chaque fragment en utilisant une clé correspondant au fragment ; et
la recombinaison des fragments chiffrés en fonction d'une séquence des fragments avant la division pour obtenir le fichier chiffré.

3. Procédé selon la revendication 2, dans lequel le déchiffrage, par le système de dispositifs, du fichier chiffré en fonction des paramètres de chiffrage comprend :
la division du fichier chiffré en N fragments en fonction de l'ensemble d'indicateurs de fragment ;
le déchiffrage de chaque fragment en fonction d'une clé de l'ensemble de clés qui correspond au fragment ; et
la recombinaison des fragments déchiffrés en fonction de la séquence des fragments avant la division dans le fichier d'origine.

4. Procédé selon l'une quelconque des revendications 1 à 3, dans lequel le système de gestion de réseau envoie le fichier chiffré au système de dispositifs via la liaison de transfert de fichier en fonction d'un protocole de transfert de fichier, et dans lequel le système de gestion de réseau envoie un chemin de transfert pour envoyer le fichier chiffré et les paramètres liés au protocole de transfert de fichier au système de dispositifs via la liaison de sécurité.

5. Système de téléchargement de fichier, **caractérisé en ce qu'**il comprend : un système de gestion de réseau et un système de dispositifs, dans lequel le système de gestion de réseau comprend un dispositif d'acquisition de fichier, un dispositif de chiffrage et un dispositif d'envoi de fichier, et le système de dispositifs comprend un dispositif de réception de fichier, un dispositif de déchiffrage et au moins un dispositif client,
dans lequel le dispositif d'acquisition de fichier est configuré pour acquérir un fichier d'origine, le dispositif de chiffrage est configuré pour chiffrer le fichier d'origine afin d'obtenir un fichier chiffré et des paramètres de chiffrage correspondant au fichier chiffré, et le dispositif d'envoi de fichier est configuré pour envoyer le fichier chiffré au système de dispositifs via une liaison de transfert de fichier et envoyer les paramètres de chiffrage au système de dispositifs via une liaison de sécurité,
le dispositif client est configuré pour télécharger le fichier chiffré depuis le système de gestion de réseau, le dispositif de réception de fichier est configuré pour acquérir les paramètres de chiffrage depuis le système de gestion de réseau, et le dispositif de déchiffrage est configuré pour déchiffrer le fichier chiffré en fonction des paramètres de chiffrage afin d'obtenir le fichier d'origine,
dans lequel la liaison de transfert de fichier est une liaison de protocole de transfert de fichier, FTP, via laquelle le système de gestion de réseau transfère les fichiers entre lui-même et le système de dispositifs, et la liaison de sécurité est une liaison de protocole de commande de transmission, TCP ;
dans lequel le dispositif de chiffrage comprend un module de fragmentation, un module d'acquisition de paramètre et un module de chiffrage,
dans lequel le module de fragmentation est configuré pour diviser le fichier d'origine acquis en N fragments en fonction d'une règle de division prédéfinie, N étant un entier supérieur ou égal à 1,
dans lequel le module d'acquisition de paramètre est configuré pour acquérir un ensemble d'indicateurs de fragment pour enregistrer une position d'une tête de chaque fragment chiffré dans le fichier chiffré et un ensemble de clés pour enregistrer une clé de chaque fragment, dans lequel les paramètres de chiffrage comprennent l'ensemble d'indicateurs de fragment et l'ensemble de clés, et
dans lequel le module de chiffrage est configuré pour chiffrer et recombiner les N fragments pour obtenir le fichier chiffré ;
dans lequel le module de chiffrage est configuré pour générer une clé pour chaque fragment, pour chiffrer chaque fragment à l'aide d'une clé correspondant au fragment, et pour recombiner les fragments chiffrés en fonction d'une séquence des fragments avant la division pour obtenir le fichier chiffré,
dans lequel la règle de division prédéfinie comprend la division aléatoire du fichier d'origine pour obtenir N fragments, chacun d'eux étant plus long ou aussi long qu'un bloc de données chiffrées le plus petit.

6. Système selon la revendication 5, dans lequel le dispositif de déchiffrage est configuré pour diviser le fichier chiffré en N fragments en fonction de l'ensemble d'indicateurs de fragment, pour déchiffrer chaque fragment en fonction d'une clé de l'ensemble de clés qui correspond au fragment, et pour recombiner les fragments déchiffrés en fonction de la séquence des fragments avant la division dans le fichier d'origine.

7. Système selon la revendication 5 ou 6, dans lequel le dispositif d'envoi de fichier comprend un serveur de transfert de fichier à travers lequel le dispositif d'envoi de fichier envoie le fichier chiffré au système de dispositifs via la liaison de transfert de fichier.
